# EUROPEAN PATENT APPLICATION

(11) **EP 4 033 488 A1**
(43) Date of publication of application: **27.07.2022**
(21) Application number: 20864461.7
(22) Date of filing: 10.09.2020
(51) Int. Cl.: G11B 27/00, G11B 20/10, G06F 3/06

(54) **RECORDING DEVICE, RECORDING METHOD, RECORDING PROGRAM, AND MAGNETIC TAPE**

(30) Priority: 17.09.2019 JP 2019168507
(71) Applicant: FUJIFILM Corporation, Tokyo 106-8620 (JP)
(72) Inventor: KONDO, Michitaka, Tokyo 106-8620 (JP)
(74) Representative: Klunker IP Patentanwälte PartG mbB
(86) International application number: PCT/JP2020/034325
(87) International publication number: WO 2021/054243

(57) **Abstract**

A recording device includes a derivation unit that derives a number to be grouped in a case where a plurality of data are collectively recorded on a recording medium based on condition information including a size of the plurality of data to be recorded on the recording medium, a size of metadata related to each of the plurality of data, and an assumed value of a number of the data read out from the recording medium within a period determined in advance, and a control unit that performs control to collectively record the data on the recording medium for each of the number to be grouped.

## Description

### BACKGROUND OF THE INVENTION

### 1. Field of the Invention

The present disclosure relates to a recording device, a recording method, a recording program, and a magnetic tape.

### 2. Description of the Related Art

In the related art, as a method of improving access performance in a case where readout is performed sequentially from the beginning of a recording medium, a technique in which data and metadata related to the data are recorded on the recording medium as one group has been disclosed (refer to JP2010-152603A).

### SUMMARY OF THE INVENTION

In a case where a plurality of data is recorded on a recording medium, in an aspect in which metadata is added to each piece of data and the data and the metadata are collectively recorded one by one, a total capacity of the metadata increases and a transfer speed may decrease. Therefore, it is desirable that a certain number of data and one piece of metadata related to each piece of data are recorded on the recording medium as one group to reduce the total capacity of the metadata and suppress the decrease in the transfer speed.

On the other hand, in a case where data is read out from the recording medium, it is necessary to read out all pieces of the data included in a group including the desired data. Therefore, in a case where the number of data included in one group is too large, a time for reading out unnecessary data other than the desired data may increase and the data readout time may become long.

In a case where a plurality of data are simultaneously read out from the recording medium, it is necessary to move a reproducing element from a head group to an end group where each of the plurality of data is included. Therefore, in a case where the number of data included in one group is too small, since a ratio of a metadata capacity to the total capacity from the head group to the end group becomes large, a distance to move the reproducing element may increase and the data readout time may become long.

The present disclosure provides a recording device, a recording method, a recording program, and a magnetic tape capable of shortening a readout time of data recorded on a recording medium.

A first aspect of the present disclosure is a recording device that comprises a derivation unit that derives a number to be grouped in a case where a plurality of data are collectively recorded on a recording medium based on condition information including a size of the plurality of data to be recorded on the recording medium, a size of metadata related to each of the plurality of data, and an assumed value of a number of the data read out from the recording medium within a period determined in advance, and a control unit that performs control to collectively record the data on the recording medium for each of the number to be grouped.

In a second aspect of the present disclosure, in the first aspect, the condition information may further include range information representing a range on the recording medium that is assumed to be searched in a case where the plurality of data are read out within the period.

In a third aspect of the present disclosure, in the above aspect, the derivation unit may derive the number to be grouped for each piece of different condition information and store the derived number in a storage unit. The control unit may perform control to collectively record the data on the recording medium for each of the number to be grouped stored in the storage unit corresponding to the condition information of the plurality of data to be recorded.

In a fourth aspect of the present disclosure, in the above aspect, the recording medium may be a magnetic tape.

A fifth aspect of the present disclosure is a recording method executed by a computer that comprises deriving a number to be grouped in a case where a plurality of data are collectively recorded on a recording medium based on condition information including a size of the plurality of data to be recorded on the recording medium, a size of metadata related to each of the plurality of data, and an assumed value of the number of the data read out from the recording medium within a period determined in advance, and performing control to collectively record the data on the recording medium for each of the number to be grouped.

A sixth aspect of the present disclosure is a recording program causing a computer to execute a process comprising deriving a number to be grouped in a case where a plurality of data are collectively recorded on a recording medium based on condition information including a size of the plurality of data to be recorded on the recording medium, a size of metadata related to each of the plurality of data, and an assumed value of the number of the data read out from the recording medium within a period determined in advance, and performing control to collectively record the data on the recording medium for each of the number to be grouped.

A seventh aspect of the present disclosure is a magnetic tape on which a plurality of data are recorded, in which the data is collectively recorded for each of a number to be grouped in a case where a plurality of data are collectively recorded on the magnetic tape, which is derived based on condition information including a size of the plurality of data, a size of metadata related to each of the plurality of data, and an assumed value of the number of the data read out from the magnetic tape within a period determined in advance.

An eighth aspect of the present disclosure is a recording device that comprises a memory that stores a command to be executed by a computer and a processor configured to execute the stored command. The processor derives a number to be grouped in a case where a plurality of data are collectively recorded on a recording medium based on condition information including a size of the plurality of data to be recorded on the recording medium, a size of metadata related to each of the plurality of data, and an assumed value of a number of the data read out from the recording medium within a period determined in advance, and performs control to collectively record the data on the recording medium for each of the number to be grouped.

According to the above aspect, the recording device, the recording method, the recording program, and the magnetic tape of the present disclosure can shorten the readout time of the data recorded on the recording medium.

### BRIEF DESCRIPTION OF THE DRAWINGS

Fig. 1 is a block diagram showing an example of a configuration of a recording/readout system according to an exemplary embodiment.
Fig. 2 is a block diagram showing an example of a hardware configuration of an information processing device according to an exemplary embodiment.
Fig. 3 is a diagram showing an example of a state in which data and metadata are recorded on a magnetic tape.
Fig. 4 is a block diagram showing an example of a functional configuration of the information processing device according to an exemplary embodiment.
Fig. 5 is a diagram showing a seek distance in a case where the number of data per pack is one.
Fig. 6 is a diagram showing the seek distance in a case where the number of data per pack is three.
Fig. 7 is a diagram showing the seek distance in a case where the number of data per pack is five.
Fig. 8 is a graph showing an average seek distance for each number of data per pack.
Fig. 9 is a diagram showing an example of a correspondence table.
Fig. 10 is a flowchart showing an example of a record process according to an exemplary embodiment.

### DESCRIPTION OF EMBODIMENTS

Hereinafter, an embodiment for implementing a technique of the present disclosure will be described in detail with reference to drawings.

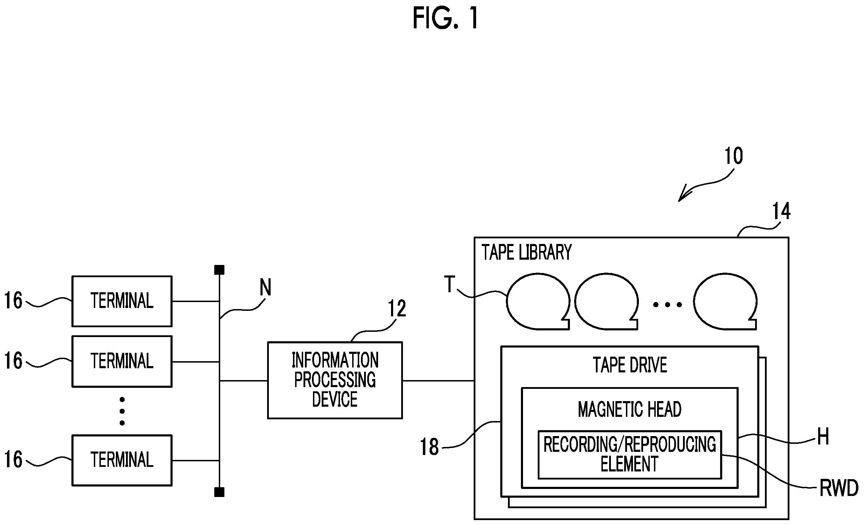

First, a configuration of a recording/readout system 10 according to the present exemplary embodiment will be described with reference to Fig. 1. As shown in Fig. 1, the recording/readout system 10 includes an information processing device 12 and a tape library 14. The tape library 14 is connected to the information processing device 12. The information processing device 12 and a plurality of terminals 16 are connected to a network N and can communicate through the network N.

The tape library 14 comprises a plurality of slots (not shown) and a plurality of tape drives 18, and a magnetic tape T as an example of a recording medium is stored in each slot. An example of the magnetic tape T includes a linear tape-open (LTO) tape.

In a case where the information processing device 12 writes or reads out data on the magnetic tape T, the magnetic tape T to be written or read out is loaded from the slot into any one of the tape drives 18. In a case where the information processing device 12 completes the writing or readout for the magnetic tape T loaded into the tape drive 18, the magnetic tape T is unloaded from the tape drive 18 to the originally stored slot.

The tape drive 18 comprises a magnetic head H. The magnetic head H comprises a recording/reproducing element RWD that records and reproduces the data on the magnetic tape T.

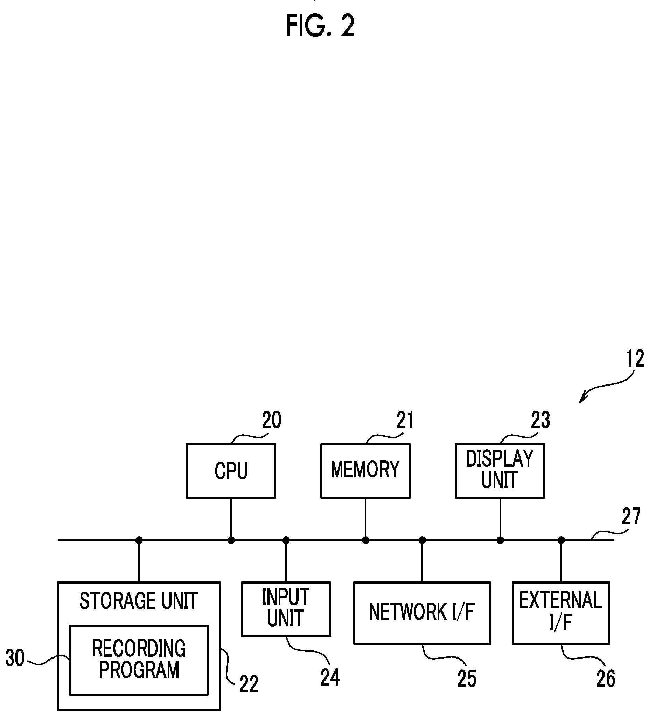

Next, a hardware configuration of the information processing device 12 according to the present exemplary embodiment will be described with reference to Fig. 2. As shown in Fig. 2, the information processing device 12 includes a central processing unit (CPU) 20, a memory 21 as a temporary storage area, and a nonvolatile storage unit 22. The information processing device 12 includes a display unit 23 such as a liquid crystal display, an input unit 24 such as a keyboard and a mouse, a network interface (I/F) 25 connected to the network N, and an external I/F 26 connected to the tape library 14. The CPU 20, the memory 21, the storage unit 22, the display unit 23, the input unit 24, the network I/F 25, and the external I/F 26 are connected to a bus 27.

The storage unit 22 is formed by a hard disk drive (HDD), a solid state drive (SSD), a flash memory, and the like. The storage unit 22 as a storage medium stores a recording program 30. The CPU 20 reads out the recording program 30 from the storage unit 22, develops the program in the memory 21, and executes the developed recording program 30. An example of the information processing device 12 includes a server computer. The information processing device 12 is an example of a recording device that records the data on the magnetic tape T.

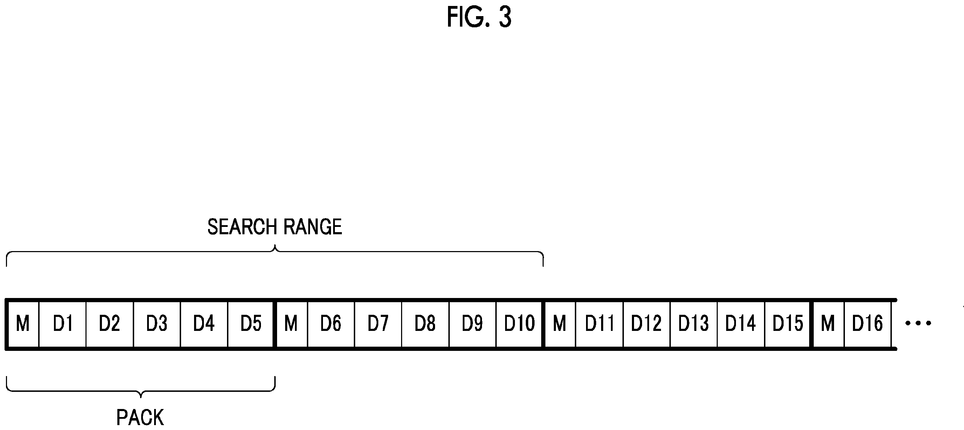

Fig. 3 shows an example of a state in which the data and metadata related to the data are written on the magnetic tape T by the information processing device 12. The metadata includes identification information such as a data name of corresponding data, a data size, and attribute information indicating a data attribute such as a timestamp.

As shown in Fig. 3 where the data is represented by D and the metadata is represented by M, the number of data to be grouped, which is derived by a derivation unit 42 described below, and one piece of metadata related to each piece of data are recorded on the magnetic tape T as one group (hereinafter referred to as "pack"). In the example of Fig. 3, the number to be grouped is five. The data is read out from the magnetic tape T by the information processing device 12 for each pack. That is, even in a case where a part of the data in the pack is read out, all pieces of the data in the pack is an access target.

In the magnetic tape T in the present exemplary embodiment, the data that may be simultaneously read out is assumed to be recorded within a range determined in advance. The term "simultaneously" may be within a period determined in advance. For example, the term "simultaneously" is also used in a case where an instruction to read out a plurality of data at a time is input by one user and the plurality of data are continuously read out. For example, the term "simultaneously" is also used in a case where an instruction to read out the data is input by each of a plurality of users within a period determined in advance and a plurality of data desired by each of the plurality of users are read out. Hereinafter, the same applies to the case of describing "simultaneously".

Therefore, in a case where a plurality of data are simultaneously read out from the magnetic tape T, the information processing device 12 is assumed to be able to read out all pieces of desired data by searching within the range determined in advance from a position where the data read out first among the plurality of data is recorded. Hereinafter, a range on the magnetic tape T that is searched in a case where the plurality of data are simultaneously read out is referred to as a "search range". In the example of Fig. 3, data D2 to data D10 that may be simultaneously read out with data D1 are recorded within the search range.

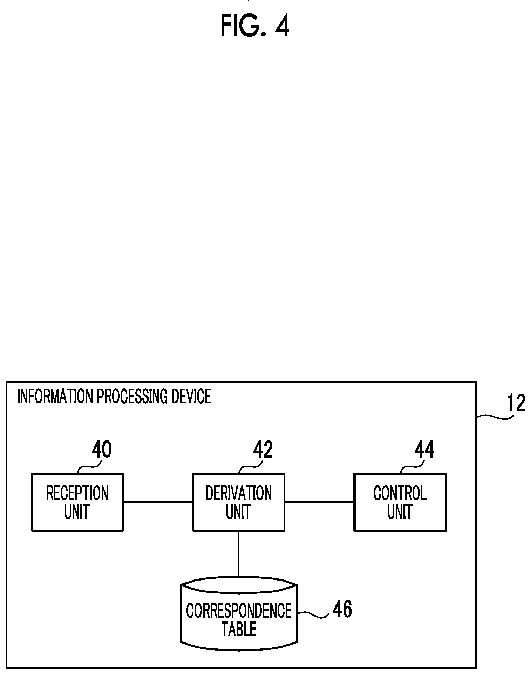

Next, a functional configuration of the information processing device 12 according to the present exemplary embodiment will be described with reference to Fig. 4. As shown in Fig. 4, the information processing device 12 includes a reception unit 40, the derivation unit 42, and a control unit 44. The CPU 20 executes the recording program 30 to function as the reception unit 40, the derivation unit 42, and the control unit 44. A correspondence table 46 described below is stored in a predetermined storage area of the storage unit 22.

The reception unit 40 receives the plurality of data and the metadata related to each of the plurality of data that are recorded on the magnetic tape T transmitted from the terminal 16 through the network I/F 25.

The reception unit 40 receives information representing an assumed value of the number of data simultaneously read out from the magnetic tape T, which is input by the user through the input unit 24 (hereinafter referred to as "number of simultaneous readout data"). That is, the user assumes the number of data simultaneously read out according to a use case and inputs the number as the number of simultaneous readout data.

The reception unit 40 receives range information representing a search range, which is input by the user through the input unit 24. That is, the user assumes the search range according to a use case and inputs the range as the range information. As the range information, for example, the number of data within the search range (for example, 100 data) may be used, or at least one size of the data or the metadata within the search range (for example, data capacity is 100 megabytes or combined capacity of data and metadata is 1 gigabyte) may be used.

The derivation unit 42 derives the number to be grouped in a case where the plurality of data are collectively recorded in the magnetic tape T, based on condition information including a size of the plurality of data received by the reception unit 40, a size of the metadata related to each of the plurality of data, the number of simultaneous readout data, and the range information. For example, a representative value, such as an average value, a minimum value, or a maximum value, of each of the data and the metadata calculated from the size of the data and the metadata received by the reception unit 40 may be used as the size of the data and the metadata.

In a case where a ratio of the size of one piece of metadata to the size of one piece of data recorded on the magnetic tape T is large, the number of simultaneous readout data is large, and the number of data within the search range is large, the influence of the metadata on a seek distance described below is large. Therefore, it is desirable to increase the number of data per pack to reduce the influence of metadata.

On the other hand, in a case where the ratio of the size of one piece of metadata to the size of one piece of data recorded on the magnetic tape T is small, the number of simultaneous readout data is small, and the number of data within the search range is small, the influence of unnecessary data due to the readout in pack unit is large. Therefore, it is desirable to decrease the number of data per pack to reduce the influence of unnecessary data included in the same pack.

The derivation unit 42 derives an optimum number of data per pack, that is, an optimum number to be grouped, based on the condition information. Hereinafter, specific examples of a derivation process of the number to be grouped by the derivation unit 42 will be described.

First, the derivation unit 42 obtains a distance moved by the magnetic head H including the recording/reproducing element RWD by changing the number of data per pack in a case where the data set randomly corresponding to the number of simultaneous readout data among the plurality of data included in the search range indicated by the range information is simultaneously read out. Hereinafter, in a case where all pieces of the data set randomly are read out, the distance moved by the magnetic head H including the recording/reproducing element RWD is referred to as "seek distance". That is, the seek distance is a distance from a head position of the pack including the data read out first of the data set randomly to an end position of the pack including the data read out last of the data set randomly. The seek distance can be obtained from the size of the data and the metadata, and a readout time of the desired data is regarded to be longer as the seek distance is longer.

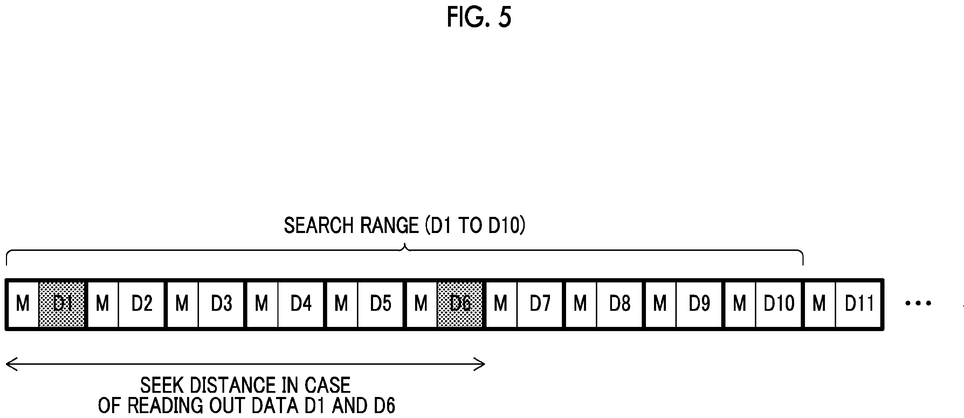

An example of the above process will be described with reference to Figs. 5 to 7. The condition information used in the examples of Figs. 5 to 7 is defined as a condition A, and each condition of the condition A is shown below.

### <Condition A>

- Data size: 200 kilobytes
- Metadata size: 2 kilobytes
- Number of simultaneous readout data: 2
- Range information: The number of data within search range is 10.

Fig. 5 is a diagram in a case where the derivation unit 42 obtains the seek distance in a case where the data D1 and the data D6 are read out with the number of data per pack as one. The seek distance in Fig. 5 is calculated from the size of six data and six metadata and is 1,212 kilobytes.

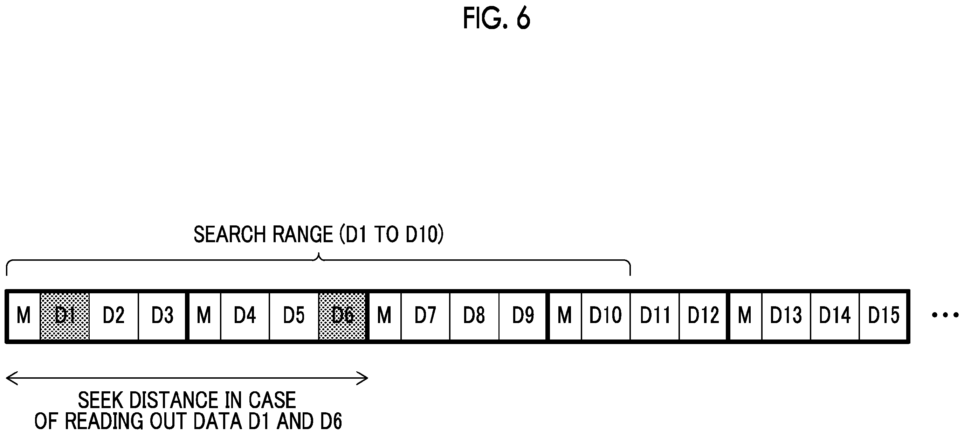

Fig. 6 is a diagram in a case where the derivation unit 42 obtains the seek distance in a case where the data D1 and the data D6 are read out with the number of data per pack as three. The seek distance in Fig. 6 is calculated from the size of six data and two metadata and is 1,204 kilobytes.

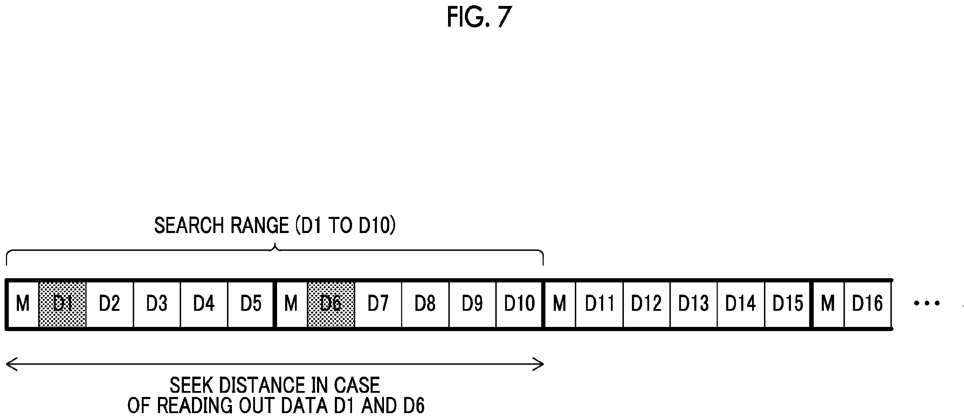

Fig. 7 is a diagram in a case where the derivation unit 42 obtains the seek distance in a case where the data D1 and the data D6 are read out with the number of data per pack as five. Since the data is read out for each pack, the data in the range up to the data D10 is read out in the example of Fig. 7. Therefore, the seek distance in Fig. 7 is calculated from the size of ten data and two metadata and is 2,004 kilobytes.

Since positions of the data simultaneously read out are random within the search range, the seek distance is different in a case where the data to be read out changes. For example, in the examples of Figs. 5 to 7, the seek distance in a case where the data D1 and the data D10 are read out is different from the seek distance in a case where the data D1 and the data D6 are read out.

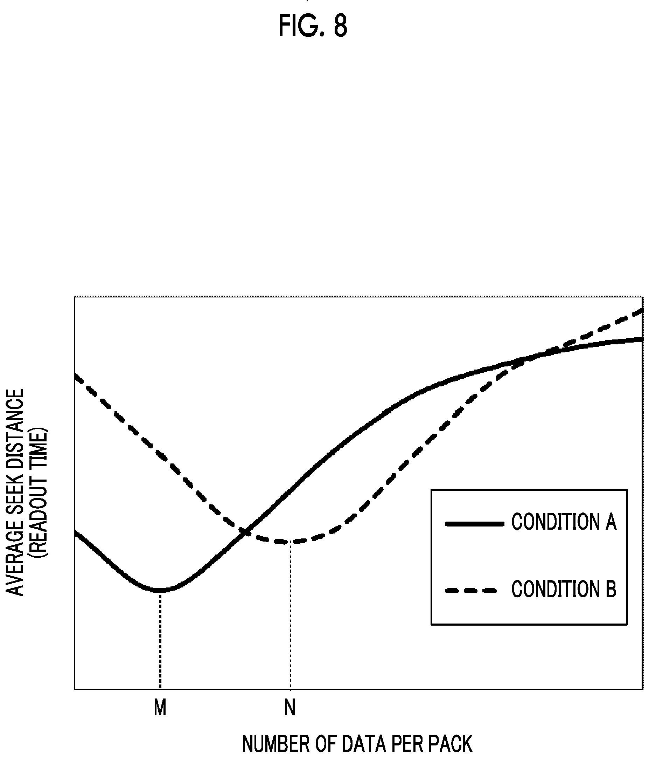

Therefore, next, the derivation unit 42 obtains the seek distance for each number of data per pack by changing the data to be read out. The derivation unit 42 repeats this process to obtain an average seek distance, which is an average of seek distances for each number of data per pack. An example of the result obtained by the above is shown as the condition A in Fig. 8. In a case where the derivation process of the number to be grouped is executed using the condition information different from the condition A, a different result is obtained for the average seek distance for each number of data per pack, as shown as a condition B in Fig. 8.

Next, the derivation unit 42 derives the number of data per pack in a case where the average seek distance is the smallest as the number to be grouped. In the example of Fig. 8, the number to be grouped under the condition A is derived as M, and the number to be grouped under the condition B is derived as N.

Next, the derivation unit 42 stores the derived number to be grouped in the correspondence table 46 in association with the condition information. That is, the number to be grouped for each condition for which the derivation process is already executed is sequentially stored in the correspondence table 46.

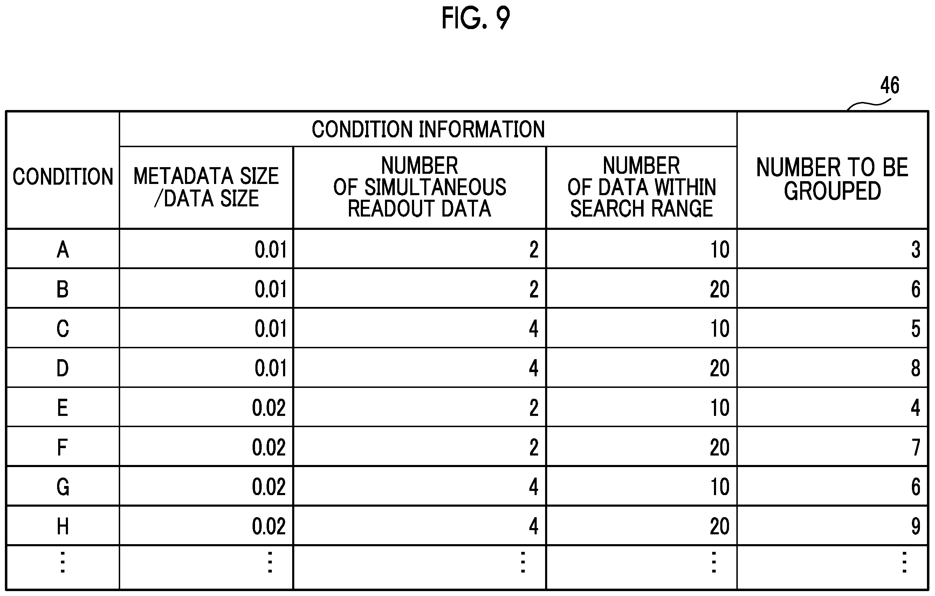

Fig. 9 is an example of the correspondence table 46. In the correspondence table 46, the identification information, the condition information, and the number to be grouped are stored in association with each other. In the example of Fig. 9, the ratio of the size of one piece of metadata to the size of one piece of data, the number of simultaneous readout data, and the number of data within the search range indicated by the range information are used as the condition information. The size of the data and the metadata may be stored in the correspondence table 46 as an independent item, but as described above, one of the conditions for determining the appropriate number to be grouped is the ratio of the size of one piece of metadata to the size of one piece of data. Therefore, in the present exemplary embodiment, the number of items and the number of records stored in the correspondence table 46 are reduced by setting the condition related to the size of the data and the metadata to the ratio of the size of one piece of metadata to the size of one piece of data.

The control unit 44 performs control to collectively record the plurality of data and metadata received by the reception unit 40 on the magnetic tape T for each number to be grouped derived by the derivation unit 42.

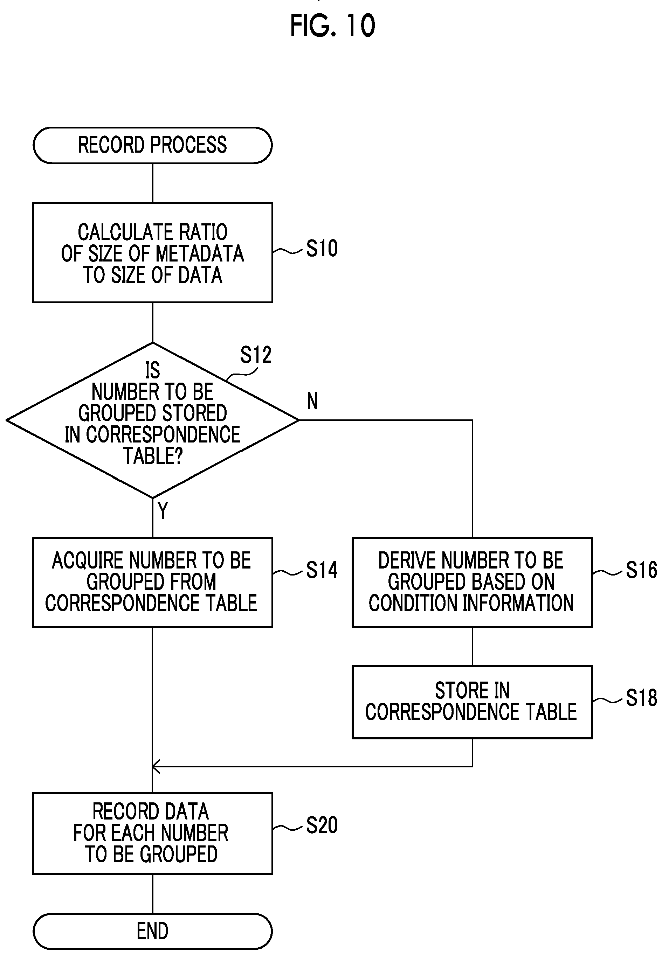

Next, an action of the information processing device 12 according to the present exemplary embodiment will be described with reference to Fig. 10. The CPU 20 executes the recording program 30 to execute a record process shown in Fig. 10. The record process shown in Fig. 10 is executed, for example, in a case where the user inputs an instruction to record the data through the input unit 24. The plurality of data and the metadata related to each of the plurality of data to be recorded on the magnetic tape T, the number of simultaneous readout data, and the range information are assumed to be received in advance by the reception unit 40.

In step S10 of Fig. 10, the derivation unit 42 calculates the size of the data and the metadata as described above, and calculates the ratio of the size of one piece of metadata to the size of one piece of data.

In step S12, the derivation unit 42 refers to the correspondence table 46 to determine whether or not the ratio calculated in step S10 and the number to be grouped corresponding to the condition information including the number of simultaneous readout data and the range information, which are received by the reception unit 40, are stored in the correspondence table 46.

In a case where the number to be grouped corresponding to the condition information is stored in the correspondence table 46 (Y in step S12), the derivation unit 42 acquires the number to be grouped corresponding to the condition information from the correspondence table 46 in step S14.

On the other hand, in a case where the number to be grouped corresponding to the condition information is not stored in the correspondence table 46 (N in step S12), the derivation unit 42 derives the number to be grouped based on the condition information as described above in step S16. In step S18, the derivation unit 42 stores the number to be grouped which is derived in step S16 in the correspondence table 46 in association with the condition information.

In step S20, the control unit 44 performs the control to collectively record the plurality of data and metadata on the magnetic tape T for each number to be grouped which is acquired in step S14 or derived in step S16. In a case where the process of step S20 ends, the main record process ends.

As described above, according to the present exemplary embodiment, the number to be grouped in a case where the plurality of data are collectively recorded on the recording medium is derived and the data is collectively recorded on the recording medium for each number to be grouped, based on the condition information including the size of the plurality of data to be recorded on the recording medium, the size of the metadata related to each of the plurality of data, and the assumed value of the number of data read out from the recording medium within a period determined in advance. Therefore, it is possible to collectively record the data on the recording medium in an appropriate number according to the condition information and thus shorten the readout time of the data recorded on the recording medium.

According to the present exemplary embodiment, the number to be grouped for each piece of different condition information is derived and stored in the storage unit, and the data is collectively recorded on the recording medium for each number to be grouped which is stored in the storage unit corresponding to the condition information of the plurality of data to be recorded. Therefore, in a case where the condition information of the data to be recorded is condition information for which the derivation process for the number to be grouped is already executed, it is not necessary to execute the derivation process again and it is possible to shorten a data writing time to the recording medium.

In the above exemplary embodiment, the case where the magnetic tape is applied as the recording medium has been described, but the present disclosure is not limited thereto. A recording medium other than the magnetic tape may be applied as the recording medium.

In the above exemplary embodiment, the case where the number of simultaneous readout data and the range information are input by the user has been described, but the present disclosure is not limited thereto. The information processing device 12 may store a readout log of the data read out from the magnetic tape T and calculate the number of simultaneous readout data and the range information based on the readout log. The information processing device 12 may acquire the readout log of the data read out from the magnetic tape T through an external I/F and calculate the number of simultaneous readout data and the range information based on the readout log. For the search range represented by the number of simultaneous readout data and the range information in these cases, a form in which a representative value, such as an average value, a minimum value, or a maximum value, of each of the number of simultaneous readout data and the range information calculated from the readout log is applied is exemplified.

In the above exemplary embodiment, the form in which the condition information is acquired and then the number to be grouped is derived has been described, but the present disclosure is not limited thereto. The information processing device 12 may derive the number to be grouped in advance for each of different condition information for the condition information of various combinations assumed to be input and store the derived number to be grouped in the storage unit. That is, in this embodiment, the number to be grouped for each of the derived condition information is included in the correspondence table 46 at a point in time in a case where step S12 of Fig. 10 is first executed.

In the above exemplary embodiment, the form in which the derived number to be grouped is stored in the storage unit in association with the condition information has been described, but the present disclosure is not limited thereto. The number to be grouped may not be stored in the storage unit, and the number to be grouped may be derived each time the condition information is input.

The condition information shown in the above exemplary embodiment is an example and is not limited to the example shown in the above exemplary embodiment. For example, at least one of the conditions included in the condition information shown in the above exemplary embodiment may be used, or another condition may be added.

In the above exemplary embodiment, for example, the following various processors can be used as hardware structures of processing units that execute various pieces of processing, such as the derivation unit 42 and the control unit 44. The various processors include a programmable logic device (PLD) which is a processor whose circuit configuration is changeable after manufacturing such as a field programmable gate array (FPGA), a dedicated electric circuit which is a processor having a circuit configuration exclusively designed to execute specific processing such as an application specific integrated circuit (ASIC), and the like, in addition to the CPU which is a general-purpose processor that executes software (program) to function as various processing units as described above.

One processing unit may be configured by one of the various processors or a combination of two or more processors of the same type or different types (for example, a combination of a plurality of FPGAs or a combination of a CPU and an FPGA). A plurality of processing units may be configured by one processor. As an example of configuring the plurality of processing units with one processor, first, there is a form in which one processor is configured by a combination of one or more CPUs and software and the processor functions as the plurality of processing units, as represented by computers such as a client and a server. Second, there is a form in which a processor that realizes the functions of the entire system including the plurality of processing units with one integrated circuit (IC) chip is used, as represented by a system-on-chip (SoC) or the like. As described above, the various processing units are configured using one or more of the various processors as the hardware structure.

Further, more specifically, a circuitry combining circuit elements such as semiconductor elements can be used as the hardware structure of the various processors.

In the above exemplary embodiment, the aspect in which the recording program 30 is stored (installed) in the storage unit 22 in advance has been described, but the present disclosure is not limited thereto. The recording program 30 may be provided in a form of being recorded on a recording medium such as a compact disc read only memory (CD-ROM), a digital versatile disc read only memory (DVD-ROM), and a Universal Serial Bus (USB) memory. The recording program 30 may be downloaded from an external device through a network.

The disclosure of JP2019-168507 filed on September 17, 2019 is incorporated herein by reference in its entirety. All documents, patent applications, and technical standards described in this specification are incorporated by reference in this specification to the same extent as in a case where the incorporation of each individual document, patent application, and technical standard by reference is specifically and individually described.

## Claims

1. A recording device comprising:
a derivation unit that derives a number to be grouped in a case where a plurality of data are collectively recorded on a recording medium based on condition information including a size of the plurality of data to be recorded on the recording medium, a size of metadata related to each of the plurality of data, and an assumed value of the number of the data read out from the recording medium within a period determined in advance; and
a control unit that performs control to collectively record the data on the recording medium for each of the number to be grouped.

2. The recording device according to claim 1,
wherein the condition information further includes range information representing a range on the recording medium that is assumed to be searched in a case where the plurality of data are read out within the period.

3. The recording device according to claim 1 or 2,
wherein the derivation unit derives the number to be grouped for each piece of different condition information and stores the derived number in a storage unit, and
the control unit performs control to collectively record the data on the recording medium for each of the number to be grouped stored in the storage unit corresponding to the condition information of the plurality of data to be recorded.

4. The recording device according to any one of claims 1 to 3,
wherein the recording medium is a magnetic tape.

5. A recording method executed by a computer, the method comprising:
deriving a number to be grouped in a case where a plurality of data are collectively recorded on a recording medium based on condition information including a size of the plurality of data to be recorded on the recording medium, a size of metadata related to each of the plurality of data, and an assumed value of a number of the data read out from the recording medium within a period determined in advance; and
performing control to collectively record the data on the recording medium for each of the number to be grouped.

6. A recording program causing a computer to execute a process comprising:
deriving a number to be grouped in a case where a plurality of data are collectively recorded on a recording medium based on condition information including a size of the plurality of data to be recorded on the recording medium, a size of metadata related to each of the plurality of data, and an assumed value of a number of the data read out from the recording medium within a period determined in advance; and
performing control to collectively record the data on the recording medium for each of the number to be grouped.

7. A magnetic tape on which a plurality of data are recorded,
wherein the data is collectively recorded for each of a number to be grouped in a case where a plurality of data are collectively recorded on the magnetic tape, which is derived based on condition information including a size of the plurality of data, a size of metadata related to each of the plurality of data, and an assumed value of a number of the data read out from the magnetic tape within a period determined in advance.
